# EUROPÄISCHE PATENTSCHRIFT

(11) **EP 0 668 986 B1**
(45) Veröffentlichungstag und Bekanntmachung des Hinweises auf die Patenterteilung: **04.06.1997**
(21) Anmeldenummer: 93924583.3
(22) Anmeldetag: 03.11.1993
(51) Int. Cl.: F25B 39/04, F25B 40/02, B60H 1/32

(54) **KONDENSATOR FÜR EINE KLIMAANLAGE EINES FAHRZEUGES**
CONDENSER FOR A VEHICLE AIR-CONDITIONING SYSTEM
CONDENSEUR POUR L'INSTALLATION DE CLIMATISATION D'UN VEHICULE

(30) Priorität: 18.11.1992 DE 4238853
(43) Veröffentlichungstag der Anmeldung: 30.08.1995
(73) Patentinhaber: Behr GmbH & Co., D-70469 Stuttgart (DE)
(72) Erfinder: Burk, Roland, D-70806 Kornwestheim (DE); Tews, Siegfried, D-70329 Stuttgart (DE)
(74) Vertreter: Riedel, Peter, Dipl.-Ing.
(86) Internationale Anmeldenummer: EP9303078
(87) Internationale Veröffentlichungsnummer: WO9411686

(56) Entgegenhaltungen:
- EP-A- 0 480 330
- DE-C- 128 794
- US-A- 4 679 410
- US-A- 4 794 765
- US-A- 5 088 294
- US-A- 5 146 767
- US-A- 5 159 821
- US-A- 5 228 315

## Beschreibung

Die Erfindung betrifft einen Kondensator für eine Klimaanlage eines Fahrzeugs, der einen Rohr-Rippenblock enthält, welcher beiderseits mit Sammelrohren versehen ist, die mittels Trennwänden derart unterteilt sind, daß der Rohr-Rippenblock einen oberen Kondensierabschnitt für gasförmiges Kältemittel und einen unteren Unterkühlabschnitt für flüssiges Kältemittel bildet, zwischen denen parallel zu einem Sammelrohr ein Sammler angeordnet ist.

Bei einem bekannten Kondensator der eingangs genannten Art (EP-0-480 330 A2) ist der Sammler, der als eine Art Zwischenspeicher für flüssiges und gasförmiges Kältemittel dient, an eine Verbindungsleitung zwischen dem Kondensierabschnitt und dem Unterkühlabschnitt angeschlossen.

Der Erfindung liegt die Aufgabe zugrunde, einen Kondensator der eingangs genannten Art so auszubilden, daß relativ große konstruktive Freiheiten bezüglich der Ausbildung des Kondensierabschnittes und insbesondere des Unterkühlabschnittes bestehen.

Diese Aufgabe wird bei einem Kondensator der gattungsgemäßen Art durch die Merkmale des Anspruchs 1 gelöst.

Die Anordnung des Sammlers, der über jeweils eigene Verbindungsöffnungen mit dem Kondensierabschnitt und dem Unterkühlabschnitt in Verbindung steht, erlaubt größere konstruktive Freiheiten. Insbesondere ist es möglich, den Unterkühlabschnitt innerhalb des Kondensators so zu gestalten, daß das flüssige Kühlmittel der Unterkühlstrecke im Bereich des unteren Endes des Kondensators zugeführt wird, so daß das flüssige Kühlmittel auf dem Weg zu einem Austrittsanschluß von unten nach oben den Kondensator mit mehreren gegenläufigen Bewegungen durchströmt. Durch die Ausgestaltung des Sammelrohrs mit dem parallelen Sammler als ein Doppelrohr, in dessen die beiden Rohrkammern trennende Wand die Verbindungsöffnungen angebracht sind, ergibt sich eine äußerst kompakte Bauweise, die keine nach außen abzudichtenden Verbindungs- oder Anschlußstellen enthält.

Bei einer ersten Ausführungsform wird vorgesehen, daß das Doppelrohr aus wenigstens zwei Blechprofilen zusammengefügt ist.

Bei einer anderen Ausführung der Erfindung wird vorgesehen, daß das Doppelrohr aus Blechprofilen und einem extrudierten Verbindungsprofil zusammengesetzt ist. Bei beiden Ausführungsformen erfolgt zunächst eine Vormontage und dann ein Verlöten der einzelnen Elemente in einem Ofen.

Bei einer weiteren Ausführungsform der Erfindung wird vorgesehen, daß das Doppelrohr ein extrudiertes Zwei-Kammer-Rohr ist.

In weiterer Ausgestaltung der Erfindung wird vorgesehen, daß die als Sammler dienende Rohrkammer gegenüber der Ebene des Rohr-Rippenblockes versetzt angeordnet ist. Diese versetzte Anordnung kann zu erheblichen Einbauvorteilen führen, insbesondere wenn der Kondensator zwischen einer Lüfterzarge und einem Kühler für die Motorflüssigkeit eines Fahrzeuges im Motorraum angeordnet ist, in welchem üblicherweise nur wenig Bauraum zur Verfügung steht.

Weitere Merkmale und Vorteile der Erfindung ergeben sich aus der nachfolgenden Beschreibung der in der Zeichnung dargestellten Ausführungsform.
- **Fig. 1**: zeigt einen Vertikalschnitt (entlang der Linie I-I der Fig. 2) durch einen erfindungsgemäßen Kondensator,
- **Fig. 2**: eine Draufsicht auf den Kondensator der Fig. 1,
- **Fig. 3**: eine Draufsicht auf eine abgewandelte Ausführungsform eines erfindungsgemäßen Kondensators mit seiner in ein Kraftfahrzeug eingebauten Position bezüglich weiterer Elemente,
- **Fig. 4 und 5**: abgewandelte Ausführungsformen für ein aus Blechprofilen zusammengesetztes Doppelrohr, das als Sammelrohr und Sammler dient,
- **Fig. 6 und 7**: Ansichten von als Sammelrohr und als Sammler dienenden Doppelrohren, die als extrudierte Rohre hergestellt sind,
- **Fig. 8 und 9**: Draufsichten auf die als Sammelrohr und als Sammler dienenden Doppelrohre, die jeweils aus einem Verbindungsprofil und daran befestigten Blechprofilen bestehen.
- **Fig. 10**: einen vertikalen Teilschnitt durch den unteren Bereich einer abgewandelten Ausführungsform eines Kondensators mit integriertem Sammler, und
- **Fig. 11**: einen Querschnitt durch Sammelrohr und Sammler im Bereich einer Verbindungsöffnung.

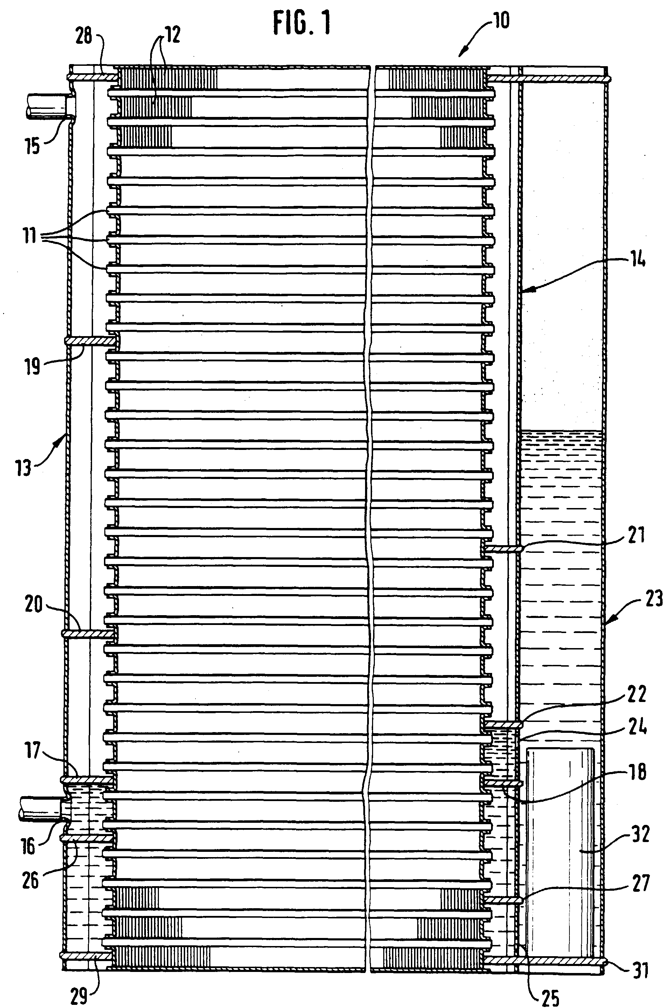

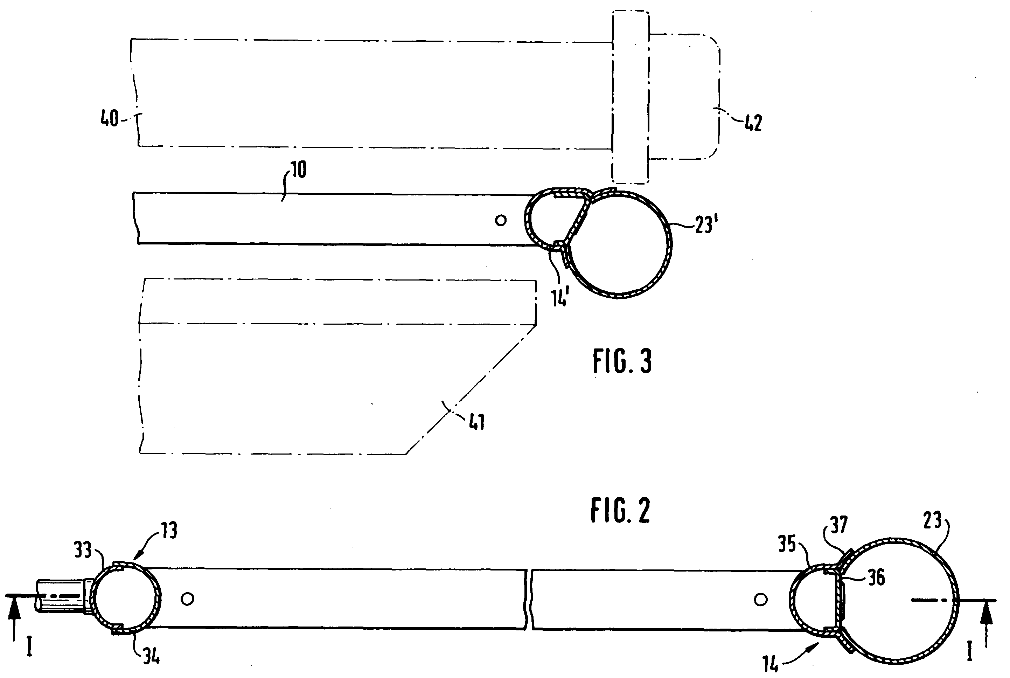

Der in **Fig. 1 und 2** dargestellte Kondensator besitzt einen Rohr-Rippenblock 10 mit horizontal liegenden Flachrohren 11 und dazwischen angeordneten Rippen 12. Die Flachrohre 11 münden in Sammelrohren 13, 14, die beiderseits über die gesamte Höhe des Rohr-Rippenblockes 10 laufen. Das in der Zeichnung linke Sammelrohr 13 ist mit einem Zulaufanschluß 15 für das von einem Verdichter kommende gasförmige Kältemittel versehen. Das gleiche Sammelrohr 13 ist außerdem mit einem Anschluß 16 für eine Leitung versehen, über die flüssiges Kältemittel zu einem Expansionsventil transportiert wird.

Die beiden Sammelrohre 13, 14 sind durch Trennwände 17, 18 in vertikaler Richtung unterteilt, die den Rohr-Rippenblock 10 in einen oberen Kondensierabschnitt für das kondensierende gasförmige Kältemittel und einen Unterkühlabschnitt für das bereits flüssige Kältemittel unterteilen. Die beiden Trennwände 17, 18 befinden sich auf gleicher Höhe. Die Sammelrohre 13, 14 sind in dem oberhalb der Trennwände 17, 18 liegenden Kondensierabschnitt mittels weiterer Zwischen-Trennwände 19, 20; 21, 22 derart unterteilt, daß das gasförmige Kältemittel einen mäanderförmigen Weg in dem Kondensierabschnitt beschreibt, wobei der Strömungsquerschnitt mit zunehmender Abkühlung entsprechend dem sich dabei verringernden Volumen des gasförmigen Kältemittels ebenfalls verringert ist.

An eines der Sammelrohre (in der Zeichnung an das rechte Sammelrohr 14) ist ein Sammler 23 angeschlossen, der über eine Verbindungsöffnung 24 an den unteren Austrittsbereich des Kondensierabschnittes angeschlossen ist. In dem Sammler 23 sammelt sich flüssiges Kältemittel bis zu einem gewissen Niveau. Darüber befindet sich gasförmiges Kältemittel. Der Sammler 23 bewirkt durch seine Funktion als Dampfabscheider und Füllmengenreservoir, daß der Zustand des aus der Verbindungsöffnung 24 in den Sammler 23 übertretenden Kältemittels im wesentlichen gesättigt ist, d.h. das Kältemittel bereits dort also vollständig kondensiert ist.

Der Sammler 23 ist über eine Verbindungsöffnung 25, die sich im Bereich des Bodens befindet, mit dem Unterkühlabschnitt verbunden, in welchem flüssiges Kältemittel unterkühlt wird. Die Sammelrohre 13, 14 sind in dem Unterkühlabschnitt durch jeweils eine Zwischen-Trennwand 26, 27 unterteilt, so daß sich ein Z-förmiger Strömungsweg für das flüssige Kältemittel von der Verbindungsöffnung 25 zu dem Austrittsanschluß 16 ergibt.

Die Sammelrohre 13, 14 sind oben und unten durch Abschlußwände 28, 29, 30, 31 verschlossen. Dabei bilden die Abschlußwände 30, 31 des Sammelrohres 14 auch gleichzeitig die oberen und unteren Abschlußwände für den an das Sammelrohr 14 angesetzten rohrförmigen Sammler 23.

Wie in Fig. 1 dargestellt ist, ist innerhalb des Sammlers 23 eine Trocknerpatrone 32 angeordnet. Bei dem Ausführungsbeispiel nach Fig. 1 ist die Trocknerpatrone 32 nicht aus dem Sammler 23 herausnehmbar. Bei einer abgewandelten Ausführungsform wird vorgesehen, daß die Verschlußwand 31, d.h. der Boden des Sammlers 23, mit einem Gewindestutzen versehen ist, in den ein dem Durchmesser der Trocknerpatrone 32 entsprechender Deckel dichtend eingeschraubt ist. Bei dieser Ausführungsform ist dann der Trockner 32 aus dem Sammler herausnehmbar und austauschbar.

Bei dem Ausführungsbeispiel nach Fig. 1 und 2 besteht das in der Zeichnung linke Sammelrohr aus zwei Blechprofilen 33, 34 von etwa halb-ovalem Querschnitt, deren Ränder sich überlappen.

Auch das in der Zeichnung rechte Sammelrohr 14 ist aus zwei Blechprofilen 35, 36 zusammengesetzt, die einander überlappen. Das Blechprofil 35 ist mit verlängerten Rändern 37 versehen, die Anschlußflächen für den Sammler 23 bilden, der aus einem im wesentlichen zylindrisch gebogenen Blechprofil besteht.

Der gesamte Kondensator ist so aufgebaut, daß er in der bisher beschriebenen Form vormontiert werden kann, wobei die einzelnen Elemente bereits kraft- oder formschlüssig zusammenhalten. In dieser zusammengebauten oder vormontierten Gestalt wird der Kondensator in einen Lötofen verbracht, in welchem ein Verlöten und damit eine feste und dichte Verbindung zwischen den einzelnen Elementen erfolgt. Hierzu sind die einzelnen Elemente in bekannter Weise mit einer Lotplattierung versehen.

In Kraftfahrzeugen ist es allgemein üblich, daß ein Kondensator, wie dies in **Fig. 3** dargestellt ist, in Fahrtrichtung vor einem Kühler 40 für das Motorkühlmittel angeordnet ist. Vor dem Kondensator befindet sich dann noch ein Gebläse mit einer Lüfterzarge 41. Bei der Ausführungsform nach Fig. 3 ist der Sammler 23' derart an das Sammelrohr 14' angesetzt, daß er versetzt gegenüber der Ebene des Rohr-Rippenblockes 10 ist. Dadurch ist es möglich, den rohrförmigen Sammler 23' an dem Sammelrohr 14' anzubringen, ohne daß die bisherigen Einbaumaße verändert werden müssen. Dabei ist es selbstverständlich auch möglich, den Sammler 23' noch weiter im Uhrzeigersinn verdreht gegenüber dem Sammelrohr 14' anzuordnen, so daß der Rohr-Rippenblock 10 mit dem Sammelrohr 14 noch dichter an den Kühler 40 herangerückt werden kann. Darüber hinaus ist es möglich, den Sammler 23' mit einer Kontur zu versehen, die mit Abstand den angedeuteten Wasserkasten 42 des Kühlers umgibt.

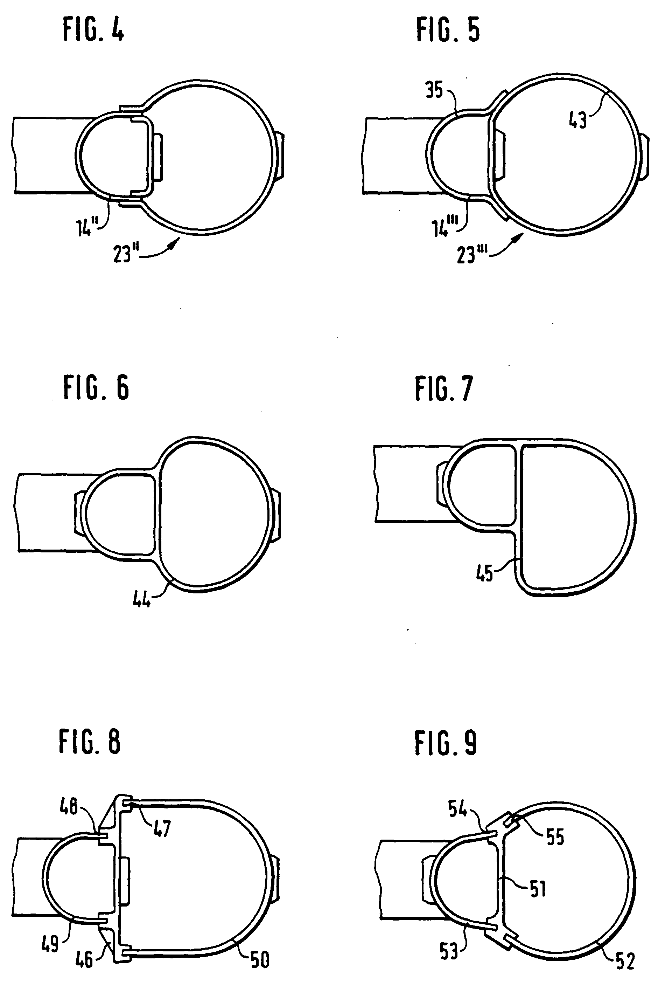

Bei der Ausführungsform nach **Fig. 4** ist vorgesehen, daß das Sammelrohr 14 " mit dem angeformten Sammler 23'' ähnlich wie Fig. 1 aus drei Blechprofilen zusammengesetzt ist. Bei dieser Ausführungsform ist jedoch das den Sammler 23'' bildende Blechprofil mit abgekanteten Laschen versehen, die sich von außen an das Sammelrohr 14'' anlegen und dort mit diesem dichtend verlötet werden.

Bei der Ausführungsform nach **Fig. 5** ist vorgesehen, daß das Sammelrohr 14''' und der Sammler 23''' nur aus zwei Blechprofilen 35 und 43 gebildet ist. Das Blechprofil 35 entspricht in seiner Form dem in Fig. 1 und 2 verwendeten Blechprofil 35. Das den Sammler 23''' bildende Blechprofil ist ein geschlossenes Rohr 43, das in dem dem Sammelrohr 14''' zugewandten Bereich eine Abflachung aufweist. Selbstverständlich ist es auch möglich, ein vollständig zylindrisches Rohr oder auch ein rechteckiges oder quadratisches oder sonstig geformtes Rohr zu verwenden.

Bei der Ausführungsform nach **Fig. 6** ist ein extrudiertes Doppelrohr 44 vorgesehen, das mit einer Rohrkammer ein Sammelrohr und mit einer anderen Rohrkammer den Sammler bildet.

Wie in **Fig. 7** dargestellt ist, kann ein Doppelrohr 45 vorgesehen werden, das ein asymmetrisches Profil aufweist, sofern dies aus Einbaugründen vorteilhaft ist.

Bei der Ausführungsform nach **Fig. 8** ist ein extrudiertes Zwischenprofil 46 vorgesehen, das mit in vertikaler Richtung verlaufenden Aufnahmeschlitzen 47, 48 versehen ist, in die die Ränder von etwa halbovalen Blechprofilen 49, 50 eingesetzt sind, die ein Sammelrohr und einen Sammler bilden.

Das gleiche Prinzip nach Fig. 8 ist auch bei dem Ausführungsbeispiel nach **Fig. 9** vorgesehen, d.h. mittels eines extrudierten Verbindungsprofils 51 werden zwei Blechprofile 52, 53 zusammengefügt, die ein Sammelrohr und einen Sammler bilden. Das Verbindungsprofil 51 ist mit in vertikaler Richtung verlaufenden Aufnahmeschlitzen 54, 55 versehen, in die die Ränder der Blechprofile 52, 53 eingesteckt sind.

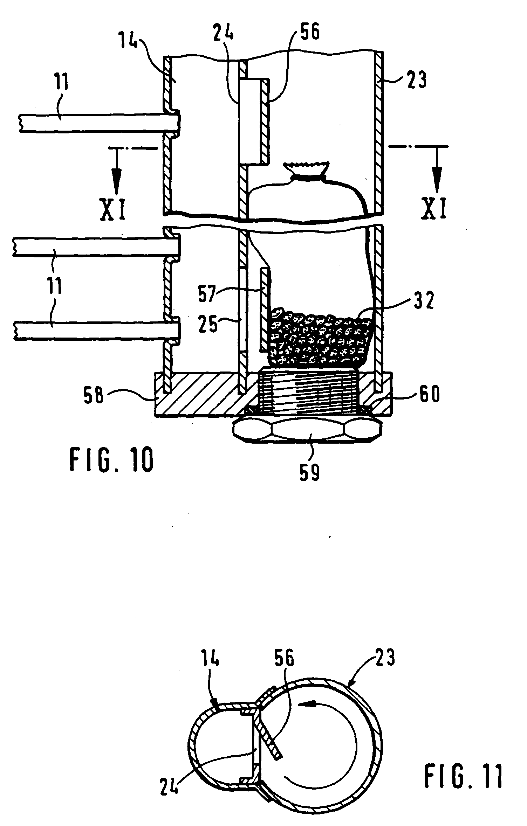

Wie schon erwähnt wurde, sorgen die in Abstand zueinander angeordneten Verbindungsöffnungen 24, 25 zwischen dem Sammelrohr 14 und dem Sammler 23 dafür, daß der Sammler von dem Kühlmittel durchströmt wird. Um sicher zu stellen, daß der Unterkühlabschnitt von der Verbindungsöffnung 25 möglichst nur flüssiges Kühlmittel erhält, muß der Sammler 23 in möglichst idealer Weise auch die Funktion eines Flüssigkeitsabscheiders erfüllen. Die Wirkung des Sammlers 23 besteht dann darin, daß sich abhängig vom Betriebszustand ein unterschiedlicher Flüssigkeitsstand im Sammler 23 ausbildet, der den Kondensationsdruck und damit die zugehörige Kondensationstemperatur so beinflußt, daß der Zustand des durch die Verbindungsöffnung 24 in den Sammler 23 zuströmenden Kältemittels in allen Betriebszuständen weitgehend ebenfalls flüssig gesättigt ist. Die schlanke Bauweise des Sammlers 23 kann dazu führen, daß infolge hoher Strömungsgeschwindigkeit des Kältemittel-Massenstroms im Sammler 23 von der Verbindungsöffnung 24 zur Verbindungsöffnung 25 Gasblasen nach unten mitgerissen werden können, wodurch die gewollte, möglichst gute Phasentrennung und damit die Trennung des Kondensatormoduls in Kondensationsabschnitt und Unterkühlabschnitt beinträchtigt würde. Um dies zu verhindern, wird gemäß dem Ausführungsbeispiel nach **Fig. 10 und Fig. 11** vorgesehen, daß die Verbindungsöffnung 24 so gestaltet ist, daß sie einen Flüssigkeitswirbel erzeugt, wodurch sich die schwereren Flüssigkeitsbestandteile des Kältemittel-Massenstroms nach außen bewegen und dann an der Innenwandung nach unten strömen, während die leichteren Gasbestandteile im Zentrum bleiben und nach oben wandern. Hierzu ist die Verbindungsöffnung 24 als eine Stanzöffnung ausgebildet, aus der eine als Führungsmittel dienende Lasche 56 herausgeklappt ist. Die Lasche 56 ist zu der anschließenden Innenwandung des Sammlers 23 gerichtet, so daß das Kältemittel mit einem Wirbel in den Sammler einströmt. Bei dem dargestellten Ausführungsbeispiel besitzt der Sammler 23 einen im wesentlichen zylindrischen Querschnitt, wobei die Lasche annähernd tangetial gerichtet ist.

Wie in Fig. 10 dargestellt ist, ist es möglich, die untere Verbindungsöffnung 25, durch welche hindurch Kältemittel aus dem Sammler 23 zu dem Unterkühlabschnitt strömt, in entsprechender Weise auszubilden. Zweckmäßig wird hier dabei vorgesehen, daß die Lasche 57 gegensinnig ausgeklappt ist, so daß das flüssige Kältemittel mit einer gleichsinnigen Strömung abströmt.

Wie ferner in Fig. 10 dargestellt ist, sind das Sammelrohr 14 und der daran anschließende Sammler 23 mittels eines gemeinsamen Deckels 58 verschlossen, der mit den Konturen von Sammelrohr 14 und Sammler 23 entsprechenden Schlitzen versehen ist, so daß dieser Deckel 58 auf die Enden von Sammelrohr 14 und Sammler 23 aufgesteckt wird und mit diesem verlötet wird. Im Bereich des Sammlers 23 ist der Deckel 58 mit einer Gewindebohrung versehen, in die ein Verschlußstopfen 59 eingeschraubt ist. Zwischen Verschlußstopfen 59 und dem Deckel 58 ist ein Dichtungsring 69 eingelegt, insbesondere ein 0-Ring. Der Trockner 32 besteht aus in ein Säckchen eingefülltem Trockengranulat. Dieser Trockner kann nach Lösen des Verschlußstopfens 59 ausgetauscht werden. Zweckmäßigerweise ist der Trockner in axialer Richtung so kurz gehalten, daß er nicht in den Bereich der Verbindungsöffnung 24 reicht, so daß dort durch den Trockner 32 die Wirbelbildung in dem Sammler 23 nicht verhindert wird.

## Patentansprüche

1. Kondensator für eine Klimaanlage eines Fahrzeugs, der einen Rohr-Rippenblock (10) enthält, welcher beiderseits mit Sammelrohren (13, 14) versehen ist, die mittels Trennwänden (17, 18) derart unterteilt sind, daß der Rohr-Rippenblock einen oberen Kondensierabschnitt für gasförmiges Kältemittel und einen unteren Unterkühlabschnitt für flüssiges Kältemittel bildet, zwischen denen parallel zu einem der Sammelrohre (13, 14) ein Sammler (23) angeordnet ist,
dadurch gekennzeichnet, daß das eine Sammelrohr (14) und der dazu parallele Sammler (23) als ein Doppelrohr ausgebildet sind, in dessen die beiden Rohrkammern trennende Wand zwei Verbindungsöffnungen (24, 25) in einem Abstand zueinander angebracht sind, und auf einem Boden (31, 58) des Sammlers (23) ein Trockner (32) angeordnet ist, der sich etwa bis zu der ersten Verbindungsöffnung (24), die den Sammler (23) mit dem Kondensierabschnitt verbindet, erstreckt, und der Sammler (23) über die zweite Verbindungsöffnung (25), die im Bereich des Bodens (31, 58) angebracht ist, mit dem Unterkühlabschnitt in Verbindung steht.

2. Kondensator nach Anspruch 1,
dadurch gekennzeichnet, daß das Doppelrohr aus wenigstens zwei Blechprofilen (35, 36, 38, 43) zusammengefügt ist.

3. Kondensator nach Anspruch 1,
dadurch gekennzeichnet, daß das Doppelrohr aus Blechprofilen (49, 50, 52, 53) und einem extrudierten Verbindungsprofil (46, 51) zusammengesetzt ist.

4. Kondensator nach Anspruch 1,
dadurch gekennzeichnet, daß das Doppelrohr ein extrudiertes Zwei-Kammer-Rohr (44, 45) ist.

5. Kondensator nach einem der Ansprüche 1 bis 4,
dadurch gekennzeichnet, daß die als Sammler (23') dienende Rohrkammer gegenüber der Ebene des Rohr-Rippenblocks (10) versetzt angeordnet ist.

6. Kondensator nach einem der Ansprüche 1 bis 5,
dadurch gekennzeichnet, daß wenigstens die erste Verbindungsöffnung (24), die von dem Kondensatorabschnitt zu dem Sammler (23) führt, einen Austritt mit einer in dem Sammler einen Strömungswirbel erzeugenden Form aufweist.

7. Kondensator nach Anspruch 6,
dadurch gekennzeichnet, daß der Austritt der Verbindungsöffnung (24) mit einem Führungselement (56) versehen ist, das hin zu einer an die Verbindungsöffnung anschließenden Wand des Sammlers gerichtet ist.

8. Kondensator nach Anspruch 1,
dadurch gekennzeichnet, daß der Boden durch einen endseitigen, mit einer Gewindebohrung versehenen Deckel (58) gebildet ist, in dem ein Verschlußstopfen angeordnet ist.

## Claims

1. Condenser for a vehicle air-conditioning system, which contains a heat exchanger (10), provided on both sides with collecting pipes (13,14) which are divided by means of partitions (17,18) in such a manner that the heat exchanger forms an upper condensing portion for gaseous refrigerant and a lower supercooling portion for liquid refrigerant, between which, parallel to the connecting pipes (13,14), there is arranged a collector (23), characterised in that the one collecting pipe (14) and the collector (23) which is parallel thereto, are formed as a double pipe, in the wall of which, which wall separates the two pipe chambers, two connecting apertures (24,25) are provided, at a distance from one another, and a dryer (32) is arranged on a base (31,58) of the condenser (23), which dryer extends approximately to the first connecting aperture (24), which connects the collector (23) to the condensing section, and the collector (23) is in connection with the supercooling section via the second connecting aperture (25), which is provided in the vicinity of the base (31,58).

2. Condenser according to Claim 1, characterised in that the double pipe is assembled of at least two sheet metal profiled sections (35, 36, 38, 43).

3. Condenser according to Claim 1, characterised in that the double pipe is assembled of sheet metal profiled sections (49, 50, 52, 53) and an extruded connection profile (46, 51).

4. Condenser according to Claim 1, characterised in that the double pipe is an extruded twin-chamber pipe (44,45).

5. Condenser according to one of Claims 1 to 4, characterised in that the pipe chamber which serves as the collector (23') is offset relative to the plane of the heat exchanger (10).

6. Condenser according to one of Claim 1 to 5, characterised in that at least the first connecting aperture (24), which leads from the condenser section to the collector (23), comprises an outlet with a shape which generates a flow eddy.

7. Condenser according to Claim 6, characterised in that the outlet of the connecting aperture (24) is provided with a guide element (56) which is directed towards a wall of the connector adjoining the connecting aperture.

8. Condenser according to Claim 1, characterized in that the base is formed by a cover (58) at the side, which is provided at the end side and provided with a threaded aperture and in which a plug is arranged.

## Revendications

1. Condenseur pour une installation de climatisation d'un véhicule, qui contient un bloc tubulaire à nervures (10) qui, des deux côtés, est muni de tubes collecteurs (13, 14) qui, au moyen de cloisons, sont divisés de façon que le bloc tubulaire à nervures forme une portion supérieure de condensation pour le réfrigérant gazeux et une portion inférieure de refroidissement pour le réfrigérant liquide, entre lesquelles est disposé un collecteur (23) parallèle à l'un des tubes collecteurs (13, 14),
caractérisé par le fait que l'un des tubes collecteurs (14) et le collecteur (23) qui lui est parallèle sont conçus sous forme d'un double tube dans la paroi, séparant les deux chambres tubulaires, duquel, sont prévues, à une certaine distance l'une de l'autre, deux ouvertures de liaison (24, 25), et que, sur un fond (31, 58) du collecteur (23) est disposé un sécheur (32) qui s'étend à peu près jusqu'à la première ouverture de liaison (24) qui relie le collecteur (23) à la portion de condensation, et que le collecteur (23) est en liaison avec la portion de refroidissement par l'intermédiaire de la seconde ouverture de liaison (25) prévue au voisinage du fond (31, 58).

2. Condenseur selon la revendication 1,
caractérisé par le fait que le double tube est composé d'au moins deux profilés en tôle (35, 36, 38, 43).

3. Condenseur selon la revendication 1,
caractérisé par le fait que le tube est composé de profilés en tôle (49, 50, 52, 53) et d'un profilé de liaison extrudé (46, 51).

4. Condenseur selon la revendication 1,
caractérisé par le fait que le double tube est un tube à deux chambres extrudé (44, 45).

5. Condenseur selon l'une des revendications 1 à 4,
caractérisé par le fait que la chambre tubulaire servant de collecteur (23') est disposée décalée par rapport au plan du bloc tubulaire à nervures (10).

6. Condenseur selon l'une des revendications 1 à 5,
caractérisé par le fait qu'au moins la première ouverture de liaison (24), qui conduit de la portion de condensation au collecteur (23), présente une sortie dont la forme produit dans le collecteur un écoulement tourbillonnaire.

7. Condenseur selon la revendication 6,
caractérisé par le fait que la sortie de l'ouverture de liaison (24) présente un élément de liaison (56) qui est orienté vers une paroi du collecteur adjacente à l'ouverture de liaison.

8. Condenseur selon la revendication 1,
caractérisé par le fait que le fond est formé par un couvercle (58) qui est placé à l'extrémité, est muni d'un taraudage et dans lequel est disposé un bouchon d'obturation.
